(19) **Europäisches Patentamt / European Patent Office / Office européen des brevets**

(11) **EP 1 923 699 B1**

(12) **EUROPEAN PATENT SPECIFICATION**

(45) Date of publication and mention of the grant of the patent:
**19.01.2011 Bulletin 2011/03**

(51) Int Cl.:
*G01N 27/64* (2006.01)

(21) Application number: **05779069.3**

(22) Date of filing: **18.08.2005**

(86) International application number:
**PCT/ES2005/070121**

(87) International publication number:
**WO 2007/020303 (22.02.2007 Gazette 2007/08)**

(54) **WIDE-RANGE DIFFERENTIAL MOBILITY ANALYSER (DMA) WITH VERY HIGH RESOLUTION**

DIFFERENTIELLER MOBILITÄTSANALYSATOR (DMA) MIT BREITEM SPEKTRUM UND SEHR HOHER AUFLÖSUNG

ANALYSEUR DIFFERENTIEL DE MOBILITE (DMA) A PLAGE DE VALEURS ETENDUE ET TRES HAUTE RESOLUTION

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**21.05.2008 Bulletin 2008/21**

(73) Proprietor: **Ramem, S.A.**
**28027 Madrid (ES)**

(72) Inventors:
• **RAMIRO ARCAS, Emilio**
  **E-28027 Madrid (ES)**
• **RIVERO JIMENEZ, Angel**
  **E-28924 Madrid (ES)**

(74) Representative: **Esteban Perez-Serrano, Maria Isabel**
**UDAPI & Asociados**
**Explanada 8**
**28040 Madrid (ES)**

(56) References cited:
**EP-A- 0 253 155**      **US-A- 5 869 831**
**US-A1- 2003 116 708**

• **DE LA MORA J F ET AL: "Differential mobility analysis of molecular ions and nanometer particles" TRAC, TRENDS IN ANALYTICAL CHEMISTRY, ELSEVIER, AMSTERDAM, NL, vol. 17, no. 6, 7 June 1998 (1998-06-07), pages 328-339, XP004125245 ISSN: 0165-9936**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## OBJECT OF THE INVENTION

This invention refers to a wide range, very high-resolution differential mobility analyzer (DMA), in which resolution is increased with regard to those known in the state of the art and in which the range of valid mobility values for the charged particles that it can simultaneously detect is also increased.

This invention is characterized by a flat configuration and a purely two-dimensional operating model in which shims are used for the improved adjustment and precision of the parallel faces forming the area of analysis and that directly affect the improvement of the resolution presented. Likewise, in the inlet face, a slit is used for injection, with the extraction of charged particles being carried out by means of a second slit.

This differential mobility analyzer is characterised by the use of one or more multi-track electric charge sensors. When an outlet slit is used, the multi-track charge sensors are located above, below or simultaneously above and below the outlet slit, allowing quicker adjustment, as well as the simultaneous mobility readings, depending on the point of impact. Likewise, it includes the use of more than one outlet slit, together with its multi-track charge sensors.

Additionally, the differential mobility analyzer may have a non-linear module in its outlet that distinguishes between particles of very similar mobility in the linear range but whose behaviour is different in the non-linear range.

It is characterized by the use of flows with high Reynolds numbers situated between $14^5$ and $10^6$ and with a turbulence level of less than 0.1%, which is possible thanks to a careful design of all the parts involved in the flow, among which the presence of a closed and pressurised aerodynamic tunnel stands out.

## BACKGROUND OF THE INVENTION

Differential mobility analyzer's (DMAs) are devices that are known for their use both in the laboratory and commercially. These devices seek to detect and analyse substances that are discriminated on the basis of the different ionic mobility of the charged particles.

A charged particle subjected to an electrical field is accelerated in the direction of the field. If the ionised particle is immersed in a fluid, there is a resistance to the movement which prevents the particle from accelerating indefinitely, rather that it quickly attains a limit speed due to the balance between the electrical force that makes it accelerate and the resistance to movement caused by the fluid. This situation of balance establishes a value for the limit speed in electrical field units of $[m^2/Vs]$, called the ionic mobility limit, which mainly depends on the specific size and configuration of the charged particle, on the dynamic viscosity of the fluid, as well as on the strength of the electrical field.

On the basis of this phenomenon, differential mobility analyzers establish an electrical field with two electrodes in an area normally known as the analysis area, crossed by a cross flow in stationary conditions.

A charged particle that is injected into an electrode tends to travel to the other electrode due to the action of the electrical field; nevertheless, the presence of a cross flow drags the particle in such a way that it will not impact following the line of the electrical field, but at a point downstream.

The point of impact is different depending on the type of particle, since the mobility is the property that allows the discrimination of the substance of interest.

The resolution of this type of device depends, as described in the patent with publication number US6787763, on the degree with which the turbulence in the cross flow is minimised, as well as of the Brownian diffusion.

The presence of turbulence causes fluctuations with respect to the average field of speeds that disperse the charged particle's trajectory and, when the average free travel of the particle is high due to the presence of reduced pressures or high typical residence times, the effects of the Brownian movement are greater.

It is considered that any expert in the matter knows the adminensional (adimensional) Reynolds and Peclet numbers, defined as:

$$* \ Re = L \cdot v/v;$$
$$* \ Pe = L \cdot v/D;$$

Where v is a typical speed, L a typical length, $v$ is the kinematic viscosity and D the molecular or Brownian coefficient of diffusion.

All these effects, turbulent diffusion and Brownian dispersion, are fully described and it has been proven that they depend on the Reynolds and Peclet numbers; and that these must be as high as possible in order to increase the resolution. Although it is known that, in general, for the flow in conduits, a Reynolds number of around 2000 is a critical value, above which the flow is turbulent, under certain conditions it is possible to maintain the laminar flow above this Reynolds value or with a small level of turbulence.

Mainly, the presence of gradients that are favourable to pressure are sought in all areas of the conduit, maintaining the limit layer adhering to the walls without it separating, preventing it from growing unnecessarily and eliminating the presence of disturbances (vibrations, wrinkles) that could spark off instabilities and increase the level of background turbulence.

The cases cited in the background section of the patent with the publication number US6787763 are included for reference, noting that the said patent claims to reach Reynolds numbers in the range of $10^5$. The geometry that is used in this analyzer is cylindrical, where there are factors of imprecision which cannot be avoided:

- The cylindrical geometry has a central rod with cylindrical symmetry on which coaxiality has to be ensured and, given that this rod consists of more than one piece, its thinness and the machining errors of each piece and of the seatings accumulate, prejudicing coaxiality. This type of configuration requires at least five adjustments to achieve coaxiality. The lack of coaxiality, however small it may be, has an important effect on the electrical field, which is very sensitive to this factor.

- The use of cylindrical geometries does not offer any absorption of coaxial vortices in the conduit which could induce oscillations in the flow.

- In this type of device, once knowing the degrees of expansion and contraction to be normally high, being important sources of turbulence.

- In current devices, the perimeter feed is carried out non-uniformly, which means that the reading conditions do not match a correct condition of cylindrical symmetry. The cross flow feeds in this type of device undergo sudden expansions that are not always stabilised down stream.

The long length of the inlet mouth of the analyzer and the use of very small accelerations are described as inconveniences in the section of this patent dedicated to the state of the art.

In this patent with publication number US6787763, use is made of the cylindrical configuration in which the inconveniences of the flat analyzer described in the patent with publication number US5869831 are said to have been overcome.

It must be said that, although a flat analyzer is used in patent US5869831, both the injection or insertion of charged particles and the extraction are carried out via holes. It is enough to consider that the presence of instabilities in the flow or in the electrical field could cause a very large adjustment problem, since the trajectory does not avoid three-dimensional effects in the direction perpendicular to the plane defined by the electrical field and in the main direction of the cross flow. These deviations must also be controlled so that the adjustment of these factors causes the treatment of this analyzer to be three-dimensional in practice and not two-dimensional even though planes are used.

Although there are classifiers with configurations that are very close to two-dimensional behaviours with laminar flow conditions in the field of aerosols, these are made for particles that are injected with a secondary flow that causes a mixing layer that induces turbulence and a three-dimensional aspect, as well as an important change in the original profile of the speeds of the cross flow. Likewise, this type of device works with pressures that are lower than atmospheric pressure and with speeds in the subsonic or incompressible range.

The patent with the publication number WO2004048924 in which a method and apparatus for carrying out a spectrometry of ionic mobility is described is also to be highlighted.

In this patent, use is made of a cross flow with an electrical field. An ioniser injects the ions into the working volume perpendicular to the direction of the electrical field, contrary to normal practice in a DMA, in such a way that the particle undergoes a double drag: one drag in the direction of the flow and which is in the same direction as that of the entry of the ionised particles, and a perpendicular drag due to the electrical field. The combination of the two forces causes a trajectory that is, in principle, curved which depends on the ion's electrical mobility to reach a point that is more or less further away.

The spectrum readings are carried out in a vectorial charge sensor that provides different values for the deposited charge according to the incidence point. Given that the measurements are made within a specific time period, it is necessary to reset the instrument to zero before carrying out each test.

In all the backgrounds considered, the DMAs analysed place the emphasis on their internal configuration, but not on upstream and downstream flow conditions. This invention includes a closed-circuit, pressurised, aerodynamic tunnel that prolongs the internal design of the analyzer in such a way that all the components involved in this flow are involved. The quality of the flow obtained is one of the main reasons that cause the analyzer's resolution to be notably higher. So much so that, for the first time, it has been possible to carry out measurements of particle mobility in the sub-nanometre range.

Therefore, this invention involves a numerous set of improvements both overall and specific that increase the resolution and measurement range of the analyser, as well as other properties such as response and analysis speed, simple maintenance, efficiency, analysis capability in the sub-nanometre range and sensitivity.

## DESCRIPTION OF THE INVENTION

The analyzer in this invention represents an important development over the analyzers described in the section on the state of the art. The analyzer described here could be considered as a variation on the design of those that use a cylindrical geometry as described in the section on the state of the art. If this cylindrical configuration is developed, it gives rise to a flat configuration as long as the inlet and outlet, if they exist, are formed by a slit and the conditions of both the flow and the electrical field can be modelled as two-dimensional.

The basic configuration consists of a prismatic region with a rectangular base in which two opposing walls are made up of electrodes, the electrodes that define the electrical field.

Two of the remaining opposing sides of the control volume defined by the prismatic region form the inlet and outlet of the flow, called cross flow because, except in special cases, it is perpendicular to the electrical field. Depending on which opposing faces are chosen, these will be coplanar with or perpendicular to the electrical field.

The entry of charged particles is carried out by electrostatic injection via a slit in one of the electrodes in such a way that the charged particle travels to the other electrode, driven by the electrical field. The drag of the cross flow fluid establishes an impact band for particles of equal electrical mobility in the other electrode downstream.

The entry of charged particles is said to be carried out by electrostatic injection for two reasons: one because if it were carried out with the entry of a secondary flow, it could cause a jet or curtain that introduces turbulence and, secondly and more importantly, because at the speeds of the cross flow, the secondary flow appears as an obstacle that would generate shock waves, the appearance of large, non-stationary whirlpools, separation of the limit layer and other unwanted phenomena. In order to achieve an injection of charged particles in these conditions, there must be no pressure differences on both sides of the slit. It is important to emphasise that there is no other exchange of fluid, except that of the charged particles or ions, between the analyzer and the inlet.

With respect to the region or area of impact, the normal practice in this invention is for it to be established on the opposing face to the injection, although this is not strictly necessary. In this area of impact there is at least one multi-track sensor and, optionally, when the target particle is to be extracted, there is an outlet slit. The analyzer in this invention may therefore use one or more slits combined with one or more multi-track sensors, which may be located below the outlet slit, above it or by simultaneously combining two, above and below it.

In order to carry out the adjustment of the analyzer, two variables may be used: the speed of the cross flow and the strength of the electrical field. Depending on the mobility of the charged particle to be detected, both variables can be changed. By means of the design of the conduit through which the fluid flows, a field of speeds is determined which gives rise to a pressure close to that of the atmosphere in the analysis area so as to avoid leaks or entries of fluid to or from the exterior. Therefore, it will be the electrical field that is adjusted by varying the difference in potential between the electrodes.

The variation of one or other variable means that the particle that moves from the inlet slit travels to a point above or below the second outlet slit, when it exists. One possible adjustment consists of achieving that the particle enters the slit and that extraction can be carried out.

Part of this invention is the use of a multi-track charge sensor in such a way that, on a support, ceramic for example, a set of metallic micro-deposits is carried out along the lines. Each of these lines form a conductor in such a way that they can be connected to a data output bus connected to a signal processor. The reading can be carried out in parallel.

It is also possible to establish a family of tracks distributed on lines that, instead of being equally spaced, are concentrated around a line, defining an area of higher resolution.

When the particle reaches this sensor, depending on the track where the impact is produced, it can be determined whether or not it is necessary to increase or reduce the electrical field. In order for this sensor to be effective, the tracks must be parallel to both slits.

The use of two sensors operating simultaneously makes it possible to determine if it is necessary to increase or decrease the electrical potential according to whether the particles are arriving above or below the slit.

Likewise, simultaneous readings can be taken throughout the region defined by the area of the sensors regardless of whether a slit is used and of whether or not this slit performs the extraction.

Generally, differentiated extractions can be carried out with various slits each placed downstream of the other in such a way that each slit in turn has one or more multi-track sensors in order to be able to detect widely differing electrical mobility. Therefore, the range of this apparatus is higher than that of others.

A more advanced configuration is that which makes use of integrated chips as a multi-track sensor. This chip would have charge collectors and would include the reading functions and even the pre-processing of the input data.

Emphasis has been made in this flat analyzer of the fact that it has slits and never perforations, which could give rise to possible transverse effects which cannot be considered two-dimensional.

Care has been taken to ensure that the slits do not reach the ends in order to avoid the wall effects and that the presence of limit layers in the flow cause three-dimensional disturbances in the ends of the slits, preventing the two-dimensional modelling and behaviour of the device. The special care that has been taken in the design of the contraction and of the chamfers with smooth evolution and adjusted using numerical simulations have resulted in a very uniform speed profile in the throat. Thus the effects of the walls are very localised within 5% of the total width, allowing the width of the slit to be very close to the width of the throat or cross-section of the analysis area, preventing edge effects. At the same time the efficiency of the device is greatly increased, as the classification area is 80% or 90% of the travel area).

One of the possible modes of establishing higher resolution on the configuration of the analyzer consists of providing two or more analyzers in series. In this case, from the practical point of view, it is important to avoid differences in potential between analyzers.

For this purpose, the use of multiple electrodes is proposed, at least two in the inlet, so that the analysis area has an electrical field that is mainly oriented transversely to the cross flow, although the difference in potential between the inlet and outlet electrodes is null. With this difference in potential being null, two or more analyzers can be interconnected in series, so that each of them is adjusted in a range of narrower mobility and, as a result, achieving a much higher resolution. This technique also allows the interconnection of other equipment or accessories. The simplest case is when the inlet conduit is at the same potential as the outlet and at the same time in the inlet, this conduit is isolated from the feeder electrode. Since the inlet conduit is a conductor, as a final result, it could be considered that three electrodes are being used.

A second improvement consists of inserting one or more intermediary electrodes with slits that could simulate several analyzers operating in series, establishing intermediary discriminations that may reduce the degree of dispersion in the final reading in the sensor. This scheme reduces the effects of Brownian dispersion.

The other important factor in the increase in resolution is based on the careful design of a closed and pressurised aerodynamic tunnel for the cross flow. Although the details of this closed and pressurised aerodynamic tunnel will be described in the detailed description of the invention, it can be stated that this solution is responsible for the increase in the sensitivity and overall resolution of the device since it affects two variables that are responsible for resolution: the quality and uniformity of the cross flow (better signal to noise ratio) and the high Peclet number (increased resolution). The seal achieved together with the establishment of a closed area allows an increase in sensitivity. The pressurisation with pressures higher than atmospheric pressure is required in order to achieve the electrostatic injection and is only possible in its closed-circuit configuration. A set of solutions is established that provides a flow in the control volume defined by the analysis area with a Reynolds number that can reach $10^6$, preferably around $10^5$, with a degree of turbulence of less than 0.1%. The details of this design will be described in more detail in the example embodiment. Although the level of turbulence of 0.1% is indicated as the criterion for the undertaking of the invention because it is desired to reach a maximum level of resolution and sensitivity, by reducing the resolution criteria, this maximum level can be raised to 1%. Likewise, it can be stated that working in an almost sonic range provides two beneficial effects: raising the density, which also results in a higher Reynolds number and, above all, reducing the temperature, thus achieving a lower Brownian effect.

Another objective which has been achieved with the design of the cross flow circuit is that of occupying the minimum size so that this device can be used as a portable measurement device to detect target substances.

This invention may include an additional module in the outlet slit that increases the analyzer's resolution. This module can work either in the linear range or in the non-linear range of electrical mobility behaviour of the particles, although it is true that it is in the latter where the overall resolution of the analyzer is increased notably.

Electrical mobility has a weak dependence on the strength of the electrical field and its behaviour may usually be described as being almost a constant. This behaviour is valid up to a certain value for the electrical field where the electrical mobility starts to show its dependency on the electrical field.

When two particles of a different nature show an electrical mobility value that is very similar in the linear range, the analyzer may confuse them and not be able to distinguish one from the other.

Once the two particles with very similar mobility have exited via the outlet slit, they enter this last module which consists of a conduit with electrodes on each side. The electrodes are polarised with an asymmetric wave and with a potential so that the strength of the electrical field is sufficiently high that the behaviour enters the non-linear range. In this range, mobility is more clearly different, for which reason the trajectories will also be different.

When the polarisation is alternate, a broken trajectory is obtained in which the displacement in one direction or another gives different displacement distances for each particle since the mobility in the non-linear range is clearly differentiated. Thus it is possible to discern between two particles which in the linear range show very similar behaviours in their typical curves. Nevertheless, it is possible to makes this last module work in the linear range.

## DESCRIPTION OF THE DRAWINGS

This description is complemented with a set of plans illustrating the preferred example and never limiting the invention.

Figure 1 is a representation of the analysis area of an analyzer according to this invention.

Figure 2 is a schematic representation of the incidence surface with two multi-track sensors, showing a multi-track sensor in detail out of its final location.

Figure 3 is a schematic representation in which the use of more than one electrode in order for a reduction in the dispersion of the inlet data is shown.

Figure 4 shows a configuration of the analysis area with an electrical field given by a combination of electrodes that have the same potential at the inlet as at the outlet.

Figure 5 shows a configuration scheme of the fluid recirculation circuit to form the closed invention.

Figure 6 is a graph that shows the electrical mobility with behaviour in the linear and non-linear area of two charged particles, so that its mobility in the linear range is indistinguishable.

Figure 7 shows a schematic cross-section of the conduit following the outlet slit with the selection module that uses the different electrical mobility in the non-linear range. This cross-section shows the upper electrode isolated from the conduit with a polarisation indicated by the exciting function.

Figure 8 shows an exploded view of the essential parts of the main body forming the analysis area.

## DETAILED DESCRIPTION OF VARIOUS EMBODIMENTS

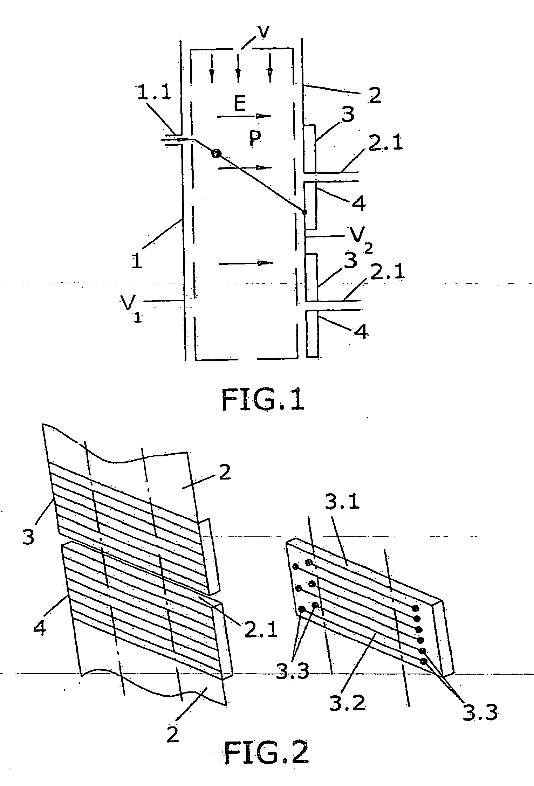

Figure 1 is a scheme of the analyzer provided as an example for a detailed description of the invention, showing the analysis area determined by a control volume (V) called the analysis area. This analysis area is essentially prismatic on a rectangular base except for small changes, for example, at the edges, due to aerodynamic requirements.

The left of the figure shows the electrode (1) that occupies the vertical face fixed to a potential $V_1$ and to the right a second electrode (2) fixed to a potential $V_2$. The first electrode (1) shows an entrance slit (1.1) for the entry of charged particles that is essentially prolonged throughout the entire width measured in the direction perpendicular to the paper. In this example of embodiment, particles are extracted via a second slit (2.1) located in the second electrode. In these practical constructions, the slits (1.1, 2.1) can be said to be prolonged essentially throughout the width measured in the direction perpendicular to the paper, given that the ends do not reach the faces that delimit them, preventing disturbances due to the limit layers both of these faces that delimit them and the vertices of the control volume (V). This precaution ensures that the problem is really two-dimensional. Nevertheless, it has already been stated that this locating of the ends of the slits (1.1, 2.1) is very small because the appearance of instabilities due to the effect of the corner has been minimised since, as described below, chamfers with a suitable evolution have been incorporated, adjusted using numerical simulations.

In this analysis area there is an electrical field **E** (denoted **E** in bold since it is a vectorial magnitude), which extends from the left electrode to the right one.

According to the direction that will be used in the figures and especially in the first one, what has been called the cross flow throughout this description descends vertically, which is nothing more than a fluid crossing the analysis area (V) vertically at a high Reynolds number. In the tests carried out in order to construct the invention, Reynolds numbers higher than $10^5$ are being worked with. The flow is characterized by a stationary field of speeds v, which is very uniform and with a very low level of turbulence. The conditions that allow the maintenance of this flow in these conditions will be detailed further on.

The charged particle (P) leaves the slit (1.1) of the first electrode and is dragged by two forces, one to the right, due to the presence of the electrical field E and the other, downwards, due to the drag of the fluid in which it is immersed.

Depending on the electrical mobility, the charged particle (P) will arrive above, in or below the second slit (2.1).

In this embodiment, two multi-track sensors (3, 4) have been used, one above and the other below the slit (2.1) so that it is possible to determine the point of incidence in order to correct the intensity of the electrical field and, in turn, to adjust the place of impact or to make it exit through the second slit (2.1).

Emphasis has been placed on the need to achieve both a two-dimensional configuration and two-dimensional conditions for the electrical fields and for the fluid dynamics in the analysis area (V).

The first condition is achieved using a support structure that allows the definition of flat parallel faces. The parallelism is achieved using calibrated shims for the plates that cover each face of the prism that delimits the analysis area (V).

If plates are used that are joined to beams at some of their edges, a serious problem arises, which is the difficulty of ensuring the sealing. If a gasket is built into the contact surface, this either does not define a closed-circuit or does not close all the possible routes that occur in the corners. Geometrically, sealing can only be achieved with a gasket in the form of a 3D cage. The manufacture of this type of gasket is complex and expensive.

As an alternative, by means a specific execution mode, it has been decided for the structure of the device to be a mechanized structure made with insulating material that uses the configuration in the form of a cage.

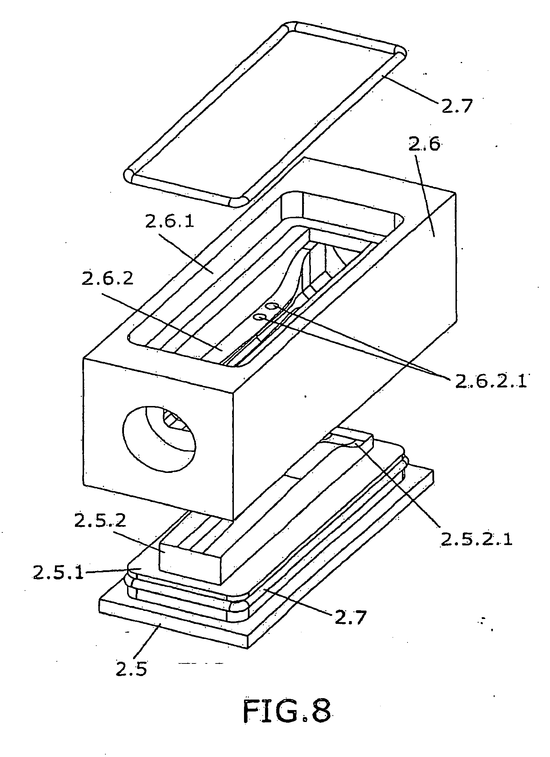

As an example, Figure 8 shows the structure of the main body (26) of the analysis area (V), a configuration that can be obtained, for example, by machining and by vacuum (26.1). The advantage of this structure, apart from its dimensional rigidity and stability, is the ease in achieving the parallel internal faces with the required degree of precision and, at the same time, a perfect seal because the configuration of each of the gaskets (27) may be closed.

The main body (26) is hollowed (26.1) in two of its larger opposing faces. These hollows (26.1) are closed by two lids with internal stepped ridges (25.1, 25.2). The outermost step (25.1) that has a housing with an O-ring (27) on its side face so that the adjustment does not depend on the tightening of the lid (25) against the main body (26). If this had been located on the front face, it would have been necessary to include a sufficiently high number of bolts in order to maintain even pressure on the gasket.

The upper lid (25) is not shown for clarity in showing the internal cavity of the main body (26), as well as the seatings.

The same figure shows how the stepped ridge (25.2) with a slightly curved surface (25.2.1) on the furthest shown end coincides with the curved surface (26.2) of the hollow (26.1) of the main body (26).

Nevertheless, the seating of this lid is carried out on the surface of some shims (26.2.1) which are found between the two lids (25). These shims (26.2.1) are nothing more than cylindrical bodies of very hard and rigid insulating material, machined to a high dimensional and geometrical precision to set the exact distance between their ends. Given that the lids (25) rest on these shims (26.2.1) without the need for adjustments, the required parallelism between the two lids (25) is achieved with precision, thus also achieving the parallelism between the walls that delimit the analysis area (V).

This mode of achieving the parallelism not only has implications in its embodiment, but also in its maintenance since the DMAs on the market with cylindrical configurations are difficult to disassemble for maintenance because of the serious difficulty of ensuring the coaxiality after assembly by the user and, therefore, the possibility of repeating the measurements.

Figure 2 shows how this multi-track sensor has been built, this being considered an essential part of this invention. Any of the sensors (3, 4) used is made up of an insulating plate (3.1) onto which conducting metal micro tracks (3.2) are deposited. In this mode of constructing the invention, a deposition technique has been used because the relief generated by this deposition is almost void so that the flow is not disturbed, since no instabilities are generated that cause turbulence.

The laboratory tests that have been carried out used tracks with a height with respect to their deposition base of 0.1 $\mu$m. The width is of the order of 20 $\mu$m and the separation between micro tracks (3.2) is 2 $\mu$m to 5 $\mu$m.

Thickened contact points (3.3) are shown on the front face of the plate (3.1), which are also obtained by deposition.

This same representation also shows two dotted lines that represent the support places for the insulation plates that close the analysis area (V) laterally. Thus the contact points (3.3) are available on the exterior, facilitating contact for the reading of the signals, both because of their deposition and their larger contact area, for example using pressure points.

In the same representation and serving as an example, the thickened contact points (3.3) are shown aligned to the right and, to the left in alternating positions in order to allow a greater density of tracks (3.2).

This connection leads to a processor that can handle the signal, identifying whether an incident has occurred in a conducting track (3.2) of the sensor (3, 4). A reading made in this manner can be carried out in real time and simultaneously for each track (3.2) in the sensor. It is equally possible that this multi-track sensor be integrated in a chip, together with the reading and data pre-processing elements. The connection of this chip to an external processor would provide a higher level of data exchange since the processor would not need to evaluate the analogue signals obtained in a track signal.

One mode of creating this chip is using CMOS integration technology. The chip includes current pre-amplifiers, analogue to digital converters and digital multiplexing of the output signal. With a digital data output by vectors, with the reading values for each of the micro-tracks among others, a high parallel operating capacity is obtained, optimising the resolution of the individual measurement.

It is possible to build this invention with a single multi-track sensor (4), in such a way that the adjustment need only be made on one side.

This adjustment on one side means that if, for example, the sensor is in the lower part, it is necessary to start with a low potential in order to ensure that the particle impacts after passing through the slit (2). By raising the intensity of the electrical field E, the impact point of the same type of particle (P) can be adjusted towards the slit (2). Since the sensor (4) is underneath, the presence of multiple lines gives rise to a progressive reading, which gives an idea of the degree of adjustment.

The presence of a multi-track sensor (3, 4) not only permits this initial adjustment to be carried out more quickly and reliably, but also allows multiple readings to be taken at the same time for different substances. The greater the number of lines per unit of transverse length of the tracks (3.2), the greater the spatial resolution of the sensor (3, 4) is. A special case is when all the readings are made by the sensor (3, 4) and there is no outlet slit (2.1) to extract the particles from.

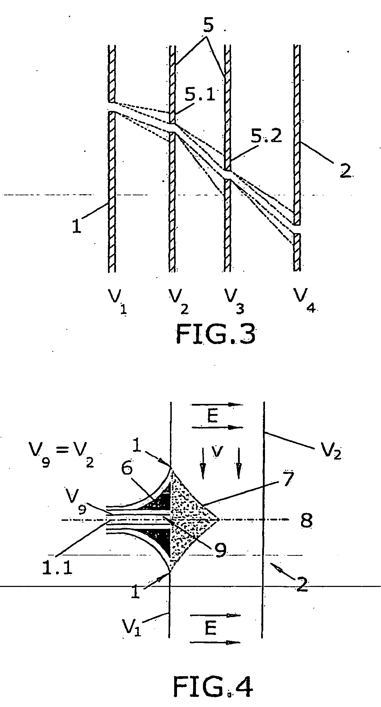

One possible improvement to the analyzer consists of the use of more than one electrode (1, 2 and 5) as shown in Figure 3. The presence of intermediate electrodes with suitable slits (5.1, 5.2) means that the particle that must enter the final slit (2.1) must first pass through various classification slits (5.1, 5.2). The fact of requiring passage through a larger number of slits in electrodes (5) with different potentials eliminates particles that increase the degree of dispersion in the final reading. The reduction of this degree of dispersion is affected not only by the presence of these intermediate electrodes (5) with slits (5.1, 5.2), but also involves the potentials and their configuration due to the fact that a broken trajectory may give way to a selection of the mobility defined over narrower ranges. This layout allows the effects of the dispersion caused by Brownian diffusion to be reduced.

It is also possible to use non-parallel electrical fields E in such a way that electrostatic lenses can be used to force a certain degree of divergence that increases the distinction level for charged particles with similar electrical mobility. In these cases, the two-dimensional behaviour of the electrical field E must be assured at all times. These distortions of the electrical field may even cause the particles to exit through slits (2.1) located on the same side as the inlet slit (1.1).

Figure 4 shows another mode of execution in which at least three electrodes (1, 2 and 9) are used. The vertical electrodes (1, 2), mainly coinciding those used in the basic scheme, except that the first one is curved near the slit (1.1) surrounding the third electrode (9) and spaced with an insulator (6). In this way, the following is verified:

$$V_2 = V_9 \text{ and } V_1 \neq V_9$$

Under these conditions, it is found that in the analysis area the electrical field is parallel in the greater part of the control volume (V) and at the same time the potentials at the inlet and outlet are equal. Near the inlet slit (1.1) there is an area (7) with a symmetry plane (8) in which there is a distortion of the electrical field E which must simply be taken into account. It is this condition that allows more than one analyzer such as that of the invention to be coupled sequentially, following a series layout that allows the resolution to be increased by various orders of magnitude. With two analyzers in series, the first would discriminate between particles with very different mobility and the second would allow the distinction between particles with very similar mobility. On the other hand, the coupling of two analyzers in series is normally used to calibrate one of the devices when the other has already been calibrated. Given that the two devices do not have equal potentials at the inlet and outlet, they have strong limitations in practice.

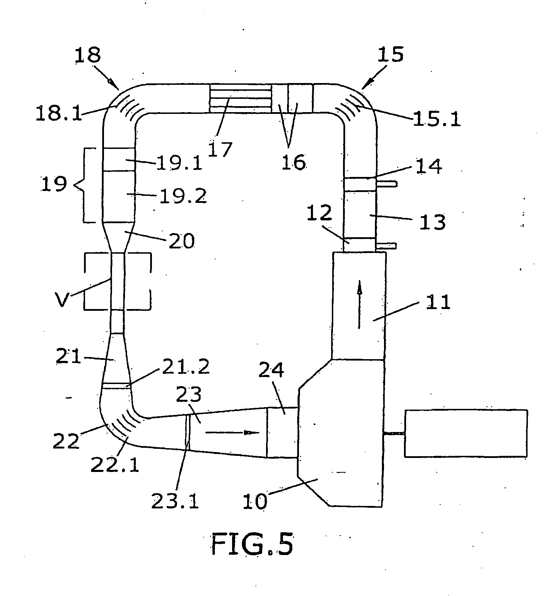

Figure 5 shows a general layout of the circuit for the cross flow. The description of this circuit starts with the compressor (10). The compressor (10) is the device responsible for maintaining the fluid in circulation. This fluid could be, for example, air or another gas that is free of impurities and particles that may affect the measurement in the analysis area. Cleanliness is an essential factor in the resolution of the DMA and not only because there are particles of dust or similar, but because the materials used in its construction must not release any type of substance since any release consists of particles that are similar to those to be detected. The compressor (10) is located in a corner of the circuit, replacing an elbow in order to avoid this type of section in which the fluid has to be forced to change direction, preventing the formation of vortices, movements of the limit layer or instabilities that result in a non-laminar fluid. On leaving the compressor (10) it has a higher pressure and this decreases over the various stages of the circuit until the analysis area (V); it then starts to increase and recover part of the loss in pressure. The next stage is a flow meter (11) that allows the flow to be measured and, therefore, the speed (v) of the cross flow in the analysis area (V).

In this example of embodiment, a valve (13) has been placed between two bleeders (12, 14) so it is possible to feed the circuit from the possible flow extracted via the outlet slit and to replace the internal fluid periodically. This replacement is carried out by closing the intermediate valve (13) to inject the fluid via a bleeder (12) which drags that which already exists as it exits via the second bleeder (14).

Given that the main objective is to reach a high Reynolds number under flow conditions in which the level of turbulence is below 0.1%, a design is required that minimises, as far as possible, the generation of turbulence, the presence of secondary flows and large vortices and that at some point a separation or movement of the limit layer is produced.

Given that the outlet of the compressor (10) has a circular cross-section and the analysis region area has a square cross-section, a transition area is needed between the two that does not generate excess vortices. Both the changes in the form of the cross-section and the restrictions in square cross-sections with changes according to different reduction factors give way to transverse components in the current which in turn could cause vortices which, if not controlled, develop into smaller vortices that could result in flows of greater turbulence downstream.

This control in the changes of cross-section has been carried out by adjusting the geometry on the basis of results from numerical simulations. As a result, a set of solutions has been adopted that prevent the appearance of secondary flows with areas of recirculation or the appearance of large-sized vortices.

Two elbows (15, 18) have been used to reach the analysis area. Given that the transition from a circular to a square cross-section has already occurred in the first straight section after the first elbow (15), these (15, 18) are of rectangular cross-section. The square cross-section makes the presence of coaxial vortices difficult.

Both the conduits and the rectangular cross-section elbows have chamfers that eliminate a large area of slow flow by converging the limit layers of both faces.

In the elbows (15, 18) a variety of curved vanes (15.1, 18.1) have been included which guide the flow so that this follows the curve of the elbow, causing rotation along the curve and preventing centrifugal type instabilities.

Nevertheless, after passing through each set of vanes (15.1, 18.1), although the appearance of vortices of a size comparable to the transverse cross-section itself is prevented, the limit layers of each vane (15.1, 18.1), as well as the compressor (10) itself and any solid obstacles, generate turbulent trails and it is because of this that it is necessary to homogenize the fluid and reduce turbulence.

In order to homogenize the flow, first a honeycomb turbulence manipulator, prismatic cells or a tube packaging (17) are used, which give way to a certain homogenization in such a way that the turbulence is more even than on entering.

To prevent the presence of particles that can introduce noise in the readings taken in the analysis area, the circuit has electrostatic precipitators (16) that allow for the withdrawal of charged or neutral particles that are ionised in the precipitator itself.

After passing through the second elbow (18), a second stage is used, consisting, for example, of a tube pack (19.1) or a panel of prismatic cells to smooth the flow, as well as grilles (19.2) with a suitable porosity and grid, each operating on a different scale of the turbulence. Both sets (19.1 and 19.2) give way to a stage in which turbulence or possible laminarisation is reduced.

The entrance to the analysis area (V) is carried out by means of a contraction (20), the cross-section of which progressively evolves and maintaining a moderated aspect ratio (in order) to avoid the different degrees of contraction produced in various directions from causing cross currents that (may) cause the movement of the limit layer and to avoid separating the fluid in a two-dimensional model. This is one of the main lackings in cylindrical DMA's, as not only do they present sudden expansions due to the direct and even side feeding in cavities of a greater cross-section, but also the changes of cross-section vary according vertices of greater or lesser angle). he numerical simulations which have led to the configurations of the example have used surfaces that follow polynomial functions or partly polynomial functions in which the continuity of the curvature is demanded). This condition must be verified in order to prevent the introduction of possible points of disturbance in the limit layer. The presence of cross flows or the non-two-dimensionality of the analysis area (V) would give way to different drag conditions depending on the point of observation in the inlet (1.1) and outlet (2.1) slits.

The pressure in the minimum area or throat region, which coincides with the analysis area (V), must be equal to that outside the slit so that there is no inlet or outlet flow. This implies pressurising the DMA, the opposite of what happens in known DMAs. The maximum pressure reached in the example analyzer is approximately 1.7atm, for a Reynolds number of $10^5$ and a maximum Mach number of 0.98. If resolution is understood as the relative width of the peak of electrical mobility at average height, these values allow resolutions substantially below 1% to be obtained, thus notably improving the state of the art, in which no DMA has ever achieved a resolution of below 1%.

Once past the analysis area (V), a first diffuser (21) with a limited degree of divergence is used in order to prevent the movement of the limit layer in the walls that may give way to recirculation flows. Expansion has not been carried out completely in this section, for which reason, after an elbow (22) with redirecting vanes (22.1), a second diffuser (23) is used, which also acts as the inlet to the compressor (10), thus closing the circuit.

This second diffuser (23) progressively adapts the configuration of the cross section until it matches the configuration of the inlet mouth of the compressor (10).

It is to be noted that, surprisingly, it has been found that the distance of the two diffusers arranged consecutively with an elbow between them form a length that is notably shorter than the length that would be required with a single diffuser. A plausible explanation is that the pressure jump that is established in the curved vanes (22) stabilises the flow, allowing a large degree of expansion in a smaller space. This stabilisation can be increased by including grilles. In the example described, a first grille (21.2) is included in the first section (21) and a second grille (23.1) in the second section (23). These grilles introduce a small, non-recoverable loss of pressure in exchange for the regeneration of the limit layer, which is what allows the length of the diffuser to be the notably reduced.

Just before the compressor inlet (10), there is a heat exchanger (24) that reduces the temperature of the fluid before raising its pressure. The reduction in temperature causes an increase in density which allows the output of the compressor to be increased by up to 25% - 30% in the tests carried out.

Likewise, the inclusion of radial redirectors in the compressor inlet (10) in order to reduce the transverse speed component makes the operation of the compressor (10) more efficient.

The result is a pressurised circuit with an average pressure greater than that of the atmosphere in such a way that, when operating, the maximum pressure is in the compressor outlet (10) and continues to fall to the inlet slit (1.1) which it is essentially at atmospheric pressure so as to avoid inlet or outlet flows, and later to recover greater pressure values in the diffusers, reaching those of the compressor inlet (10).

The described configuration of this circuit may not only be in the plane of the paper as in Figure 5, but may also be arranged in a different plane, for example, perpendicular to the paper, so that circulation is carried out as if the analysis area (V) had been rotated 90 degrees on its axial axis.

Likewise, the solutions proposed for particular modes of configuring the analyzer in the analysis area (V) with the optional elements of the recirculation circuit are understood as being interchangeable.

After the particle (P) exits via the slit (2.1), additional devices can be included that increase the resolution. The aim is to discern between two particles with very similar electrical mobility that have been able to exit via the same slit (2.1). In this case, it is necessary to establish mechanisms in which the difference in mobility becomes more evident.

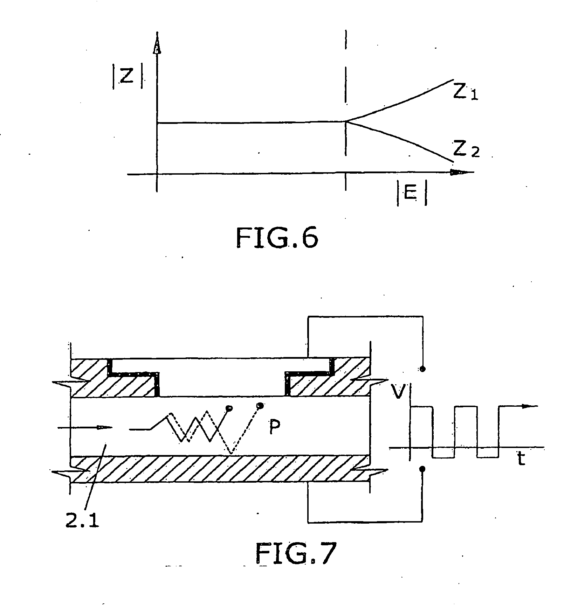

This invention includes the optional use of a non-linear separation module in the outlet. Figure 6 shows a graph of the typical mobility of a charged particle submitted to an electrical field with a strength represented by the value of the module of the electrical field |**E**|. Up to a certain value for the strength of the electrical field, mobility is a function of linear behaviour and is approximately constant. Once having surpassed this critical value, behaviour is non-linear in such a way that two particles with very similar $Z_1$ and $Z_2$ mobility values in the linear range, may differ even in the value of their first derivative in their non-linear zone. The graph shows how a mobility value may be increasing and for another type of particle may be decreasing. This change in behaviour is used in the separation module. However, the module is equally useful when working in the linear range, except that the degree of divergence is not as pronounced as in the non-linear range.

As shown in Figure 7, the operational scheme of a selector module is known and consists of passing the charged particle through a channel between two electrodes. The difference in potential between electrodes is defined as a wave, preferably asymmetrical and preferably with polarity inversion. Before a single electrical field with enough intensity so as to be situated in the non-linear area of behaviour, two particles with characteristic curves such as those shown in Figure 6 result give way to one of them being displaced with a transversal component to a greater degree than the other. Thus there will be particles that impact against the walls of the selector and those that are to be extracted that follow a broken exit trajectory thanks to the recovery of the position in the transverse direction due to the alternating form of the wave. The result is a broken trajectory in which two particles with similar mobility diverge to a greater degree. This divergence allows them to be discriminated, increasing the overall resolution of the analyzer.

**Claims**

1. A differential mobility analyzer (DMA), for discriminating charged particles that has an analysis area in which an electrical field (E) is defined by the polarisation of opposing efectrodes (1, 2) covering opposing faces and having slits (1.1, 2.1), likewise defining a perpendicular flow to said electrical field and to the principal direction of said lits and wherein said analysis area is inserted in a closed, pressurised, aerodynamic tunnel with an average pressure greater than that of the atmosphere, free of sudden expansions and in laminar conditions or with a level of turbulence below 1% where said analysis area (V) is at atmospheric pressure **characterised in that** said analysis area is delimited by a prism which has two flat parallel opposing faces covered by said electrodes (1,2) and two flat parallel insulating opposing faces forming a rectangular cross section, and where the injection of the charged particles is carried out by electrostatic injection, by means of a slit (1.1) without exchange of flow in the inlet, with the exception of the particles, and the charged particles are extracted via another slit (2.1) where the width of the slits (1.1, 2.1) is less than the distance between said insulating faces and having an area of impact that has at least one sensor made up of an insulating plate onto which tracks are deposited.

2. A differential mobility analyzer (DMA) as in claim 1, **characterised in that** the analyzer has one or more outlet slits (2.1), all arranged parallel to each other and perpendicular to the flow.

3. A differential mobility analyzer (DMA) as in claim 1, **characterised in that** the analysis area (V) has opposing electrodes, one on the charged particle (P) injection face and the other on the outlet face, which generate an uniform electrical field E.

4. A differential mobility analyzer (DMA) as in claim 3, **characterised in that** the electrode (1) located on the charged particle (P) injection face is prolonged parallel to the injection slit (1.1) being insulated (6) and facing a third electrode (9) in such a way that the electrical field E is curved (7) in injection and is maintained essentially parallel in the rest of the analysis area and where this third electrode (9) is equal in potential to the outlet electrode (2) in order to allow the chaining of analyzers.

5. A differential mobility analyzer (DMA) as in claim 3, **characterised in that** the analysis area has additional electrodes (5), each with its slits (5.1, 5.2) with their own potentials establishing intermediate means of reducing dispersion.

6. A differential mobility analyzer (DMA) as in claim 3, **characterised in that** the electrical field has diverging areas in order to increase the differentiation of trajectories in particles of similar electrical mobility.

7. A differential mobility analyzer (DMA) as in claim 6, **characterised in that** the outlet slit (2.1) is on the same face as the injection.

8. A differential mobility analyzer (DMA) as in claim 1, **characterised in that** the multi-track charge reading sensor is located downstream of each outlet slit (2.1).

9. A differential mobility analyzer (DMA) as in claim 1, **characterised in that** some or all of the outlet slits (2.1) have a second multi-track charge reading sensor located above the slit (2.1).

10. A differential mobility analyzer (DMA) as in claim 1, **characterised in that** rectangular cross-section conduits are used except in the impulsion compressor (10) so that there are transition areas in the section.

11. A differential mobility analyzer (DMA) as in claim 1, **characterised in that** the compressor (10) has an elbow in the circuit.

12. A differential mobility analyzer (DMA) as in claim 1, **characterised in that** the elbows (15, 18, 22) have multiple curved vanes (15.1, 18.1, 22.1) and aligned in order to guide the interior flow.

**13.** A differential mobility analyzer (DMA) as in claim 1, **characterised in that** the circuit has bleeders (12, 14).

**14.** A differential mobility analyzer (DMA) as in claim 1, **characterised in that** the circuit has valves (13) for the cleaning and partial closing of the circuit.

**15.** A differential mobility analyzer (DMA) as in claim 1, **characterised in that** the circuit has electrostatic precipitators (16) for cleaning the charged particles.

**16.** A differential mobility analyzer (DMA) as in claim 1, **characterised in that** between the two elbows (15, 18) located before the inlet to the analysis area (V) a package of tubes, panel of prismatic or tubular cells (17) are used in order to reduce the level of turbulence in the flow.

**17.** A differential mobility analyzer (DMA) as in claim 1 **characterised in that**, between the elbow (18) located before the inlet to the analysis area M and this (V); a stage (19) is used in order to condition and reduce the level of turbulence in the flow.

**18.** A differential mobility analyzer (DMA) as in claim 16, **characterised in that** the stage (19) for reducing the level of turbulence in the flow includes a package of tubes, panel of prismatic or tubular cells (19.1) or a polygonal grille.

**19.** A differential mobility analyzer (DMA) as in claim 17, **characterised in that** the flow lamination stage (19) includes a package of tubes, panel of prismatic or tubular cells (19.1).

**20.** A differential mobility analyzer (DMA) as in claim 1, **characterised in that** there is a diffuser in two sections, one (21) after the analysis area and another (23) before the compressor inlet compressor (10) separated by an elbow with redirecting vanes (22.1).

**21.** A differential mobility analyzer (DMA) as in claim 20, **characterised in that** there are grilles (21.2, 23.1) between the diffuser in two sections in order to stabilise the flow.

**22.** A differential mobility analyzer (DMA) as in claim 1, **characterised in that** the conduits are chamfered in order to prevent the appearance of areas of recirculation close to the corners.

**23.** A differential mobility analyzer (DMA) as in claim 1 **characterised in that** after the exit slit (2.1) there is a linear or non-linear separation module consisting of two electrodes fed by a polarisation using an asymmetric wave of alternating polarity to establish diverging broken trajectories for distinguishing between particles of very similar electrical mobility.

**24.** A differential mobility analyzer (DMA) as in claim 1 **characterised in that,** before the compressor inlet (10), there is a heat exchanger (24) in order for the reduction in temperature.

**25.** A differential mobility analyzer (DMA) as in claim 1 **characterised in that** the sensor is a chip containing the current pre-amplifiers, analogue/digital converters and digital multiplexing of the output signal.

**26.** A differential mobility analyzer (DMA) as in claim 1 **characterised in that** the main body (26) that forms the analysis areas (V) has hollows (26.1) in the larger opposing faces covered by lids (25) separated by shims (26.2.1) that are held by the perfect parallelisms between the lids (25).


**Patentansprüche**

**1.** Differentieller Mobilitätsanalysator (DMA) zum Unterscheiden geladener Teilchen, der einen Analysebereich aufweist, in dem ein elektrisches Feld (E) durch die Polarisierung gegenüber liegender Elektroden (1, 2) definiert ist, welche gegenüber liegende Seiten bedecken und Schlitze (1.1, 2.1) aufweisen, wobei gleichermaßen ein senkrechter Fluss zu dem elektrischen Feld und zu der grundsätzlichen Richtung der Schlitze definiert ist und wobei der Analysebereich in einen geschlossenen, unter Druck stehenden, aerodynamischen Tunnel eingefügt ist, in dem ein durchschnittlicher Druck vorliegt, der größer ist als der atmosphärische Druck, frei von plötzlichen Ausdehnungen und in laminaren Bedingungen oder mit einem Verwirbelungsgrad von unter 1 %, wobei der Analysebereich (V) bei atmosphärischem Druck **dadurch gekennzeichnet ist, dass** der Analysebereich von einem Prisma begrenzt ist, das zwei flache, parallele, gegenüber liegende Seiten (1, 2) aufweist, die von den Elektroden bedeckt sind, und wobei zwei flache, parallele, isolierende, gegenüber liegende Seiten einen rechteckigen Querschnitt bilden, und wobei die Injektion der geladenen Partikel durch elektrostatische Injektion mithilfe eines Schlitzes (1.1) ohne Flussaustausch in dem Einlass, mit Ausnahme der Teilchen, durchgeführt wird, und die geladenen Teilchen über einen anderen Schlitz (2.1) extrahiert werden, wobei die Breite der Schlitze (1.1, 2.1) kleiner ist als der Abstand zwischen den isolierenden Seiten, und eine Aufschlagfläche aufweist, die mindestens einen Sensor aufweist, der aus einer isolierenden Platte besteht, auf der Spuren angelegt sind.

**2.** Differentieller Mobilitätsanalysator (DMA) nach Anspruch 1, **dadurch gekennzeichnet, dass** der Analysator einen Auslassschlitz oder mehrere Auslassschlitze (2.1) aufweist, die parallel zueinander und senkrecht zum Fluss angeordnet sind.

3. Differentieller Mobilitätsanalysator (DMA) nach Anspruch 1, **dadurch gekennzeichnet, dass** der Analysebereich (V) gegenüber liegende Elektroden aufweist, eine auf der Seite der Injektion der geladenen Partikel (P) und die andere auf der Auslassfläche, die ein gleichmäßiges elektrisches Feld E erzeugen.

4. Differentieller Mobilitätsanalysator (DMA) nach Anspruch 3, **dadurch gekennzeichnet, dass** die Elektrode (1), die sich auf der Seite der Injektion der geladenen Partikel (P) befindet, parallel zum Injektionsschlitz (1.1) verlängert ist, welcher isoliert ist (6), und derart zu einer dritten Elektrode (9) zeigt, dass das elektrische Feld E bei der Injektion gekrümmt (7) und im Rest des Analysebereichs im Wesentlichen parallel gehalten ist, und wobei diese dritte Elektrode (9) hinsichtlich des Potenzials gleich ist wie die Auslasselektrode (2), um das Verketten von Analysatoren zu ermöglichen.

5. Differentieller Mobilitätsanalysator (DMA) nach Anspruch 3, **dadurch gekennzeichnet, dass** der Analysebereich zusätzliche Elektroden (5) aufweist, von denen eine jede eigene Schlitze (5.1, 5.2) und ihr eigenes Potenzial aufweist, wodurch intermediäre Mittel zum Reduzieren der Verteilung angelegt werden.

6. Differentieller Mobilitätsanalysator (DMA) nach Anspruch 3, **dadurch gekennzeichnet, dass** das elektrische Feld auseinanderlaufende Bereiche aufweist, um die Unterscheidung von Flugbahnen in Teilchen ähnlicher elektrischer Mobilität zu erhöhen.

7. Differentieller Mobilitätsanalysator (DMA) nach Anspruch 6, **dadurch gekennzeichnet, dass** sich der Auslassschlitz (2.1) auf derselben Seite wie die Injektion befindet.

8. Differentieller Mobilitätsanalysator (DMA) nach Anspruch 1, **dadurch gekennzeichnet, dass** sich der mehrspurige Ladungsmesssensor nachgeschaltet (downstream) zu jedem Auslassschlitz (2.1) befindet.

9. Differentieller Mobilitätsanalysator (DMA) nach Anspruch 1, **dadurch gekennzeichnet, dass** einige oder alle der Auslassschlitze (2.1) einen zweiten mehrspurigen Ladungsmesssensor aufweisen, der sich oberhalb des Schlitzes (2.1) befindet.

10. Differentieller Mobilitätsanalysator (DMA) nach Anspruch 1, **dadurch gekennzeichnet, dass** Kanäle mit rechteckigem Querschnitt verwendet werden, außer in dem Antriebskompressor (10), so dass es in dem Querschnitt Übergangsbereiche gibt.

11. Differentieller Mobilitätsanalysator (DMA) nach Anspruch 1, **dadurch gekennzeichnet, dass** der Kompressor (10) in dem Kanal eine Biegung aufweist.

12. Differentieller Mobilitätsanalysator (DMA) nach Anspruch 1, **dadurch gekennzeichnet, dass** die Biegungen (15, 88, 22) mehrere gekrümmte Flügel (15.1, 18.1, 22.1) aufweisen und ausgerichtet sind, um den inneren Fluss zu leiten.

13. Differentieller Mobilitätsanalysator (DMA) nach Anspruch 1, **dadurch gekennzeichnet, dass** die Kreisbahn Entnahmeventile (12, 14) aufweist.

14. Differentieller Mobilitätsanalysator (DMA) nach Anspruch 1, **dadurch gekennzeichnet, dass** die Kreisbahn Ventile (13) zum Reinigen und partiellen Schließen der Kreisbahn aufweist.

15. Differentieller Mobilitätsanalysator (DMA) nach Anspruch 1, **dadurch gekennzeichnet, dass** die Kreisbahn elektrostatische Abscheider (16) zum Reinigen der geladenen Teilchen aufweist.

16. Differentieller Mobilitätsanalysator (DMA) nach Anspruch 1, **dadurch gekennzeichnet, dass** zwischen den beiden Biegungen (15, 18) vor dem Einlass zum Analysebereich (V) eine Anordnung von Röhren, eine Reihe von prismatischen oder rohrartigen Zellen (17), verwendet wird, um den Verwirbelungsgrad in dem Fluss zu reduzieren.

17. Differentieller Mobilitätsanalysator (DMA) nach Anspruch 1, **dadurch gekennzeichnet, dass** zwischen der Biegung (18) vor dem Einlass zum Analysebereich (V) und diesem (V) ein Abschnitt (19) verwendet wird, um den Verwirbelungsgrad in dem Fluss zu konditionieren und zu reduzieren.

18. Differentieller Mobilitätsanalysator (DMA) nach Anspruch 16, **dadurch gekennzeichnet, dass** der Abschnitt (19) zum Reduzieren des Verwirbelungsgrads in dem Fluss eine Anordnung von Röhren, eine Reihe von prismatischen oder rohrartigen Zellen (19.1) oder ein polygonales Gitter aufweist.

19. Differentieller Mobilitätsanalysator (DMA) nach Anspruch 17, **dadurch gekennzeichnet, dass** der Flusslaminierungsabschnitt (19) eine Anordnung von Röhren, eine Reihe von prismatischen oder rohrartigen Zellen (19.1) aufweist.

20. Differentieller Mobilitätsanalysator (DMA) nach Anspruch 1, **dadurch gekennzeichnet, dass** es in zwei Abschnitten einen Diffusor gibt, einen (21) nach dem Analysebereich und einen anderen (23) vor dem Kompressoreinlass (10), getrennt von einer Biegung mit umleitenden Flügeln (22.1).

21. Differentieller Mobilitätsanalysator (DMA) nach Anspruch 20, **dadurch gekennzeichnet, dass** es zwischen dem Diffuser in beiden Abschnitten Gitter (21.2, 23.1) gibt, um den Fluss zu stabilisieren.

22. Differentieller Mobilitätsanalysator (DMA) nach Anspruch 1, **dadurch gekennzeichnet, dass** die Kanäle abgefast sind, um das Auftreten von Rezirkulationsbereichen in der Nähe der Ecken zu verhindern.

23. Differentieller Mobilitätsanalysator (DMA) nach Anspruch 1, **dadurch gekennzeichnet, dass** es nach dem Ausgangsschlitz (2.1) ein lineares oder nichtlineares Trennmodul gibt, das aus zwei Elektroden besteht, die durch Polarisation gespeist werden, unter Verwendung alternierender Polarität mit asymmetrischer Kurve, um auseinanderlaufende unterbrochene Flugbahnen zu etablieren, um zwischen Teilchen sehr ähnlicher elektrischer Mobilität zu unterscheiden.

24. Differentieller Mobilitätsanalysator (DMA) nach Anspruch 1, **dadurch gekennzeichnet, dass** es vor dem Kompressoreinlass (10) einen Wärmeaustauscher (24) gibt, um die Temperatur zu reduzieren.

25. Differentieller Mobilitätsanalysator (DMA) nach Anspruch 1, **dadurch gekennzeichnet, dass** es sich bei dem Sensor um einen Chip handelt, welcher die Stromvorverstärker, Analog/Digital-Wandler enthält, und ein digitales Multiplexing des Ausgangssignals durchführt.

26. Differentieller Mobilitätsanalysator (DMA) nach Anspruch 1, **dadurch gekennzeichnet, dass** der Hauptkorpus (2.6), welcher die Analysebereiche (V) bildet, Höhlungen (2.6.1) in den größeren gegenüber liegenden Seiten aufweist, die von Deckeln (2.5) bedeckt sind, welche von Abstandsscheiben (2.6.2.1) getrennt sind, die durch die perfekte Parallelität zwischen den Deckeln (2.5) gehalten werden.

**Revendications**

1. Analyseur à mobilité différentielle (AMD), pour la discrimination des particules chargées qui possède une zone d'analyse dans laquelle est défini un champ électrique (E) par la polarisation d'électrodes opposées (1, 2) couvrant des faces opposées et ayant des fentes (1.1, 2.1) définissant également un écoulement perpendiculaire audit champ électrique et à la direction principale desdites fentes et dans lequel la dite zone d'analyse est insérée dans un tunnel fermé, pressurisé et aérodynamique avec une pression moyenne supérieure à celle de l'atmosphère, sans dilatations soudaines et dans des conditions laminaires ou avec un niveau de turbulence inférieur à 1% où ladite zone d'analyse (V) est à pression atmosphérique **caractérisé en ce que** ladite zone d'analyse est délimitée par un prisme qui possède deux faces opposées parallèles plates couvertes par lesdites électrodes, deux faces opposées isolantes parallèles formant une section transversale rectangulaire, et où l'injection des particules chargées est menée à terme par injection électrostatique, par le biais d'une fente (1.1) sans échange d'écoulement à l'entrée, à l'exception des particules, et les particules chargées sont extraites par une autre fente (2.1) où la largeur des fentes (1.1, 2.1) est inférieure à la distance existante entre lesdites faces isolantes et possédant une zone d'impact qui a au moins un capteur constitué d'une plaque isolante sur laquelle sont déposées des pistes.

2. Analyseur à mobilité différentielle (AMD) selon la revendication 1, **caractérisé en ce que** l'analyseur possède une ou plusieurs fentes extérieures de sortie (2.1), toutes disposées parallèles les unes aux autres et perpendiculaires à l'écoulement.

3. Analyseur à mobilité différentielle (AMD) selon la revendication 1, **caractérisé en ce que** la zone d'analyse (V) possède des électrodes opposées, une sur la face d'injection de la particule chargée (P) et l'autre sur la face extérieure, qui génèrent un champ électrique uniforme E.

4. Analyseur à mobilité différentielle (AMD) selon la revendication 3, **caractérisé en ce que** l'électrode (1) située sur la face d'injection de la particule chargé (P) se prolonge en parallèle à la fente d'injection (1.1) qui es isolée (6) et en regard d'une troisième électrode (9) de telle manière que le champ électrique E se courbe (7) lors de l'injection et se maintient essentiellement parallèle dans le reste de la zone d'analyse et où cette troisième électrode (9) est identique en potentiel à l'électrode de sortie (2) afin de permette l'enchaînement d'analyseurs.

5. Analyseur à mobilité différentielle (AMD) selon la revendication 3, **caractérisé en ce que** la zone d'analyse possède des électrodes additionnelles (5), chacune avec ses fentes (5.1, 5.2) avec leurs propres potentiels établissant des moyens intermédiaires de réduction de la dispersion.

6. Analyseur à mobilité différentielle (AMD) selon la revendication 3, **caractérisé en ce que** le champ électrique possède des zones divergentes afin d'augmenter la différentiation de trajectoires dans les particules à mobilité électrique similaire.

**7.** Analyseur à mobilité différentielle (AMD) selon la revendication 6, **caractérisé en ce que** la fente de sortie (2.1) se trouve su la même face que l'injection.

**8.** Analyseur à mobilité différentielle (AMD) selon la revendication 1, **caractérisé en ce que** le capteur de charge multi-pistes de lecture est situé en aval de chaque fente de sortie (2.1)

**9.** Analyseur à mobilité différentielle (AMD) selon la revendication 1, **caractérisé en ce que** quelques ou toutes les fentes (2.1) possèdent un deuxième capteur de charge multi-pistes de lecture situé au-dessus de la fente (2.1)

**10.** Analyseur à mobilité différentielle (AMD) selon la revendication 1, **caractérisé en ce que** l'on utilise les conduits à section transversale rectangulaire sauf dans le compresseur d'impulsion (10) de manière qu'il y a des zones de transition dans la section.

**11.** Analyseur à mobilité différentielle (AMD) selon la revendication 1, **caractérisé en ce que** le compresseur (10) possède un coude dans le circuit.

**12.** Analyseur à mobilité différentielle (AMD) selon la revendication 1, **caractérisé en ce que** les coudes (15, 18, 22) ont de multiples ailettes courbées (15.1, 18.1, 22.1) et alignées afin de guider l'écoulement intérieur.

**13.** Analyseur à mobilité différentielle (AMD) selon la revendication 1, **caractérisé en ce que** le circuit possède des purgeurs (12, 14).

**14.** Analyseur à mobilité différentielle (AMD) selon la revendication 1, **caractérisé en ce que** le circuit possède des valves (13) pour le nettoyage et la fermeture partielle du circuit.

**15.** Analyseur à mobilité différentielle (AMD) selon la revendication 1, **caractérisé en ce que** le circuit possède des précipitateurs électrostatiques (16) pour nettoyer les particules chargées.

**16.** Analyseur à mobilité différentielle (AMD) selon la revendication 1, **caractérisé en ce qu'**entre les deux coudes (15, 18) situés avant l'entrée à la zone d'analyse (V) on utilise un paquet de tubes, un panneau de cellules prismatiques ou tubulaires (17) pour la réduction du niveau de turbulence dans l'écoulement.

**17.** Analyseur à mobilité différentielle (AMD) selon la revendication 1, **caractérisé en ce qu'**entre le coude (18) situé avant l'entré à la zone d'analyse (V) et la (V) on utilise une étape (19) afin de conditionner et réduire le niveau de turbulence dans l'écoulement.

**18.** Analyseur à mobilité différentielle (AMD) selon la revendication 16, **caractérisé en ce que** l'étape (19) de réduction du niveau de turbulence dans l'écoulement comprend un paquet de tubes, un panneau de cellules prismatiques ou tubulaires (19.1)' ou une grille polygonale.

**19.** Analyseur à mobilité différentielle (AMD) selon la revendication 17, **caractérisé en ce que** l'étape de stratification (19) de l'écoulement comprend un paquet de tubes, un panneau de cellules prismatiques ou tubulaires (19.1).

**20.** Analyseur à mobilité différentielle (AMD) selon la revendication 1, **caractérisé en ce qu'**il y a un diffuseur en deux sections, une (21) après la zone d'analyse et une autre (23) avant l'entrée au compresseur (10) séparées par un coude de redirectionnement (22.1).

**21.** Analyseur à mobilité différentielle (AMD) selon la revendication 20, **caractérisé en ce qu'**il y a des grilles (21.3, 23.1) situées entre le diffuseur en deux sections afin de stabiliser l'écoulement.

**22.** Analyseur à mobilité différentielle (AMD) selon la revendication 1, **caractérisé en ce que** les conduits sont chanfreinés pour éviter l'apparition de zones de recirculation proches des angles.

**23.** Analyseur à mobilité différentielle (AMD) selon la revendication 1, **caractérisé en ce qu'**après la grille (2.1), il y a un module de séparation linéaire ou non-linéaire consistant en deux électrodes alimentées par une polarisation utilisant une onde asymétrique de polarité alternante pour établir des trajectoires discontinues divergentes pour la distinction de particules à mobilité électrique très similaire.

**24.** Analyseur à mobilité différentielle (AMD) selon la revendication 1, **caractérisé en ce qu'**avant l'entrée du compresseur (10) il y a un échangeur de chaleur (24) pour la réduction de la température.

**25.** Analyseur à mobilité différentielle (AMD) selon la revendication 1, **caractérisé en ce que** le capteur est une puce contenant les préamplificateurs de courant, les convertisseurs analogique-numérique et de multiplexage numérique du signal de sortie.

**26.** Analyseur à mobilité différentielle (AMD) selon la revendication 1, **caractérisé en ce que** le corps principal (26) qui constitue les zones d'analyse (V) possède des creux (26.1) sur les grandes faces opposées couvertes par des couvercles (25) séparées par des cales (26.2.1) maintenues par le parallélisme parfait existant entre les couvercles (25).

FIG.1

FIG.2

FIG.3

FIG.4

FIG.5

$|Z|$

$Z_1$

$Z_2$

$|E|$

FIG.6

V

P

2.1

t

FIG.7

FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6787763 B
- US 5869831 A
- WO 2004048924 A